# EUROPEAN PATENT APPLICATION

(11) **EP 1 746 407 A2**
(43) Date of publication of application: **24.01.2007**
(21) Application number: 06015028.1
(22) Date of filing: 19.07.2006
(51) Int. Cl.: G01N 15/14

(54) **Blood analyzing method and blood analyzer**

(30) Priority: 21.07.2005 JP 2005211922
(71) Applicant: SYSMEX CORPORATION, Kobe-shi, Hyogo 651-0073 (JP)
(72) Inventor: Yoshida, Ayumu c/o Sysmex Corporation, Kobe-Shi Hyogo 651-0073 (JP); Itose, Yuji c/o Sysmex Corporation, Kobe-Shi Hyogo 651-0073 (JP); Uchihashi, Kinya c/o Sysmex Corporation, Kobe-Shi Hyogo 651-0073 (JP)
(74) Representative: HOFFMANN EITLE

(57) **Abstract**

A blood analyzing method is described that includes steps of: preparing a measurement sample by hemolyzing red blood cells in a blood specimen, the measurement sample containing particles; irradiating a light on the measurement sample to detect two or more types of optical information reflecting characters of the particles in the measurement sample, thereby acquiring data indicating light intensities of the respective optical information as a particle data associated with each of the particles; counting white blood cells based on the particle data; outputting the result of counting white blood cells; determining whether malarial parasites are present or not based on the particle data; and outputting the result of determining. A blood analyzer also described.

## Description

### FIELD OF THE INVENTION

The present invention relates to a blood analyzing method and a blood analyzer, and particularly to a method and an apparatus for counting white blood cells in the blood and determining whether malarial parasites are present or not.

### BACKGROUND

Malaria is a parasite infestation being widely distributed in tropical and subtropic regions wherein the malaria is transmitted by mosquito called anopheles mosquito. When the blood is sucked by anopheles mosquito carrying malarial parasite, the malarial parasite is injected into human blood together with the saliva of the anopheles mosquito. The malarial parasite invades into hepatic cells wherein the malarial parasite breeds, and they are discharged into the blood again. The malarial parasites discharged into the blood invade into red blood cells in the blood, and they grow while changing their figuration.

A method of examination for a malarial diagnosis which has been applied the most frequently heretofore is a microscopic examination in accordance with visual observation wherein a blood smear is subjected to Giemsa staining, and the blood smear stained is visually observed with a microscope, whereby the red blood cells infected by malarial parasites are detected to count the number thereof. This method, however, requires complicated processes such as smearing, fixing, and staining a blood specimen for preparing the smear. In addition, for the sake of obtaining exact results of the examination, it is necessary for such a microscopic observation of a large number of red blood cells for a long period of time; and thus, it is difficult to treat rapidly a large number of specimen materials.

On the other hand, a manner for examining malarial parasites in the blood, which is applied with flow cytometry, is studied as a method for examining the presence of malaria infection rapidly. For example, such a manner wherein red blood cells in a blood sample are hemolyzed by using a reagent containing a hemolytic agent to liberate the malarial parasites in the red blood cells; and the malarial parasites are fluorescence-stained by using a nucleic-acid staining dye, whereby an examination sample is prepared, the examination sample is introduced into a flow cytometer, cells flowing through sheath flow onto which exciting light is irradiated to obtain a forward-scattered light and fluorescence output from the cells, thereby discriminating the malarial parasites from particles other than the malarial parasites contained in the examination sample based on signal intensities derived from the forward-scattered light and the fluorescence to detect the malarial parasites, so that the malarial parasites are classified into the respective levels of growth and development such as ring form, trophozoite, and schizont is disclosed in the following patent documents.
- Patent document 1: Japanese Patent Application Laid-Open (JP-A) No. 11-75892
- Patent document 2: JP-A No. 2004-105027
- Patent document 3: U.S. Patent application publication 20040067575A

Furthermore, a method for detecting malaria infection by using a blood cell counter applying flow cytometry , whereby white blood cells containing hemozoin produced by malarial parasites are detected is reported by the following non-patent documents 1 through 7.

Non-patent document 1 Kramer et al., Relative Frequency of Malaria Pigment-Carrying Monocytes of Nonimmune and Semi-Immune Patients Flow Cytometric Depolarized Side Scatter, Cytometry, 2001, 45:133-140.

Non-patent document 2 Grobusch et al., Sensitivity of Hemozoin Detection by Automated Flow Cytometry in Non- and Semi-Immune Malaria Patients, Cytometry Part B (Clinical Cytometry), 2003, 55B:46-51

Non-patent document 3 I.B. Suh et al., Evaluation of the Abbott Cell-Dyn 4000 hematology analyzer for detection and therapeutic monitoring of Plasmodium vivax in the Republic of Korea, Tropical Medicine and International Health, December 2003, vol. 8, No. 12:1074-1081

Non-patent document 4 C. S. Scott et al., Automated detection of malaria-associated intraleucocytic haemozoin by Cell-Dyn CD4000 depolarization analysis, Clin. Lab. Haem., 2003, 25:77-86

Non-patent document 5 T. Hanscheid et al., Automated Malaria Diagnosis Using Pigment Detection, Parasitology Today, 2000, vol. 16, no. 12:549-551

Non-patent document 6 T. Hanscheid et al., Automated Detection of Malaria Pigment in White Blood Cells for The Diagnosis of Malaria in Portugal, Am. J. Trop. Med. Hyg., 2001, 64(5, 6):290-292

Non-patent document 7 C. Fourcade et al., Automated detection of malaria by using the haematology analyser Coulter(R) GEN. S™, Clin. Lab. Haem., 2004, 26:367-372

Malarial parasite consumes hemoglobin in red blood cells in human blood to multiply. In this case, heme is produced as a metabolic product, but the heme exhibits strong cytotoxic effect with respect to the malarial parasite. Accordingly, the malarial parasite converts the heme into hemozoin as a nontoxic polymer; and the malarial parasite accumulates the resulting hemozoin in its own body. In these circumstances, when white blood cells phagocytize the malarial parasite in human blood, the hemozoin remains in the white blood cells. In the methods disclosed in the above-described non-patent documents 1 through 7, a blood specimen is measured by using a blood cell counter; and white blood cells containing hemozoin are detected as the results of abnormality in the number of a specified type of white blood cells and increase in atypical white blood cells. Due to the detection results, the malaria infection of a patient is suggested.

In the meantime, it is desired that determination for presence of malarial parasite in a blood specimen is carried out together with counting of white blood cells. The white blood cell count of a patient varies depending on influences of various types of infection diseases and illness. Accordingly, if a determination result as to the presence of a malarial parasite is obtained together with the white blood cell count in the case where the white blood cell count of a patient exhibits an abnormal value, such determination whether or not malaria infection is to be considered as a cause for the abnormal white blood cell count becomes easy. In this respect, although discrimination of malarial parasite from white blood cell is referred to in the above-described patent documents 1 to 3, none of them discloses to implement counting of white blood cells together with determination of the presence of malarial parasite. A malarial parasite is far smaller than a white blood cell, intensity of the forward-scattered light or the fluorescence detected from the malarial parasite is considerably smaller as compared with that detected from the white blood cell. When the purpose is directed to detailed analysis of malarial parasites as in the technologies disclosed in the patent documents 1 to 3, it is required to set light detection sensitivity at a very high level, whereby many signals of minute forward-scattered lights and fluorescence are detected to treat them. In this case, since an apparently larger signal than a signal obtained from a malarial parasite becomes an object out of the detection, signals of the forward-scattered lights and the fluorescence obtained from many white blood cells become also the objects out of the detection. Accordingly, although it is possible to detect a part of the white blood cells, counting correctly the white blood cell and differentiating further the white blood cells detected have not been supposed in the above-described respective patent documents.

On the other hand, a blood cell counter for counting the white blood cell in blood or differentiating the white blood cells has heretofore been known. Differentiating of white blood cells means to differentiate the white blood cells into subsets, for example, three types of monocyte, lymphocyte, and granulocyte; or five types of monocyte, lymphocyte, neutrophil, eosinophil, and basophil; and to determine the numbers of the respective types, or ratios of the respective types with respect to the total white blood cell count. Such blood cell counter having a function for determining presence of a malarial parasite in blood in addition to the functions involved in the blood cell counter as described above has not yet been known. Although the manners disclosed in the above-described non-patent documents 1 through 7 are directed to a method for applying a blood cell counter, none of them detects directly malarial parasites, but it detects the white blood cells which phagocytized malarial parasites. Thus, there is such a fear that the method functions only for detecting the abnormality in the white blood cell count detected or for detecting the increase in the number of atypical white blood cells, when the method is applied to a ordinary blood test. Moreover, according to the above-described method, since the malarial parasites, which have not been phagocytized, are not detected, whereby the higher ratio of the malarial parasites, which have not been phagocytized, brings about the inferior detection sensitivity of the malaria infection. In addition, an amount of hemozoin of the white blood cells phagocytized immature malarial parasites is small; and the white blood cells in question do not exhibit significant difference from the other white blood cells containing intracellular materials such as granules from the viewpoint of morphology. Accordingly, there is such a fear that discrimination of the white blood cells containing hemozoin becomes difficult from the other white blood cells.

### SUMMARY

The scope of the present invention is defined solely by the appended claims, and is not affected to any degree by the statements within this summary.

A first blood analyzing method embodying features of the present invention includes steps of:
preparing a measurement sample by hemolyzing red blood cells in a blood specimen, the measurement sample containing particles;
irradiating a light on the measurement sample to detect two or more types of optical information reflecting characters of the particles in the measurement sample, thereby acquiring data indicating light intensities of the respective optical information as a particle data associated with each of the particles;
counting white blood cells based on the particle data;
outputting the result of counting white blood cells;
determining whether malarial parasites are present or not based on the particle data; and
outputting the result of determining.

A second blood analyzing method embodying features of the present invention includes steps of:
preparing a measurement sample by hemolyzing red blood cells in a blood specimen which is expected to contain malarial parasites;
irradiating a light to the measurement sample and detecting two or more types of optical information reflecting a character of particles in the measurement sample by two or more photodetectors, wherein detection sensitivity of each photodetector is set in a range where clinical white blood cell counting is possible; and
discriminating white blood cells from malarial parasites based on the two or more types of optical information detected, and counting the number of the white blood cells discriminated.

A first blood analyzer embodying features of the present invention includes:
a sample preparation section comprising a dispenser which provides a predetermined amount of blood specimen, a reagent chamber containing a hemolytic agent, and mixing mechanism which mixes the hemolytic agent with the blood specimen to hemolyze red blood cells in the blood, whereby a measurement sample containing particles is prepared;
a particle data acquirement section comprising a flow cell through which the measurement sample is to be flowed, a light source which irradiates a light to the measurement sample flowing through the flow cell, a first photodetector which detects a first optical information reflecting a particle character from the particles in the measurement sample to output a light intensity of the first optical information, and a second photodetector which detects a second optical information reflecting a particle character from the particles in the measurement sample to output a light intensity of the second optical information, wherein the particle data acquirement section acquires a particle data comprising data of the first and second light intensity associated with each particle;
a data analysis section which counts white blood cells and determines whether malarial parasites are present or not based on the particle data acquired by the particle data acquirement section; and
an output section which outputs the result of counting white blood cells and the determining result.

A second blood analyzer embodying features of the present invention includes:
a sample preparation section comprising a hemolytic agent addition mechanism for adding the hemolytic agent to a blood specimen which is expected to contain malarial parasites to hemolyze red blood cells in the blood specimen thereby a measurement specimen is prepared;
a detection section comprising a light source for irradiating a light to the measurement sample, and a photodetector for detecting optical information reflecting a particle character from respective particles in the measurement sample, wherein detection sensitivity of the photodetector is set in a range where clinical white blood cell counting is possible; and
a controller for discriminating white blood cells from malarial parasites based on the optical information detected by the detection section to count the white blood cells discriminated.

### BRIEF DESCRIPTION OF THE DRAWINGS

FIG. 1 is a view for explaining an appearance of a blood analyzer as one embodiment of the present invention;
FIG. 2 is a view for explaining an internal constitution of the blood analyzer as the one embodiment of the present invention;
FIG. 3 is a view for explaining a sample preparation section of the blood analyzer as the one embodiment of the present invention;
FIG. 4 is a view for explaining a detection section of the blood analyzer as the one embodiment of the present invention;
FIG. 5 is a view for explaining a control section of the blood analyzer as the one embodiment of the present invention;
FIG. 6 is a flowchart for explaining the whole control of the blood analyzer as the one embodiment of the present invention;

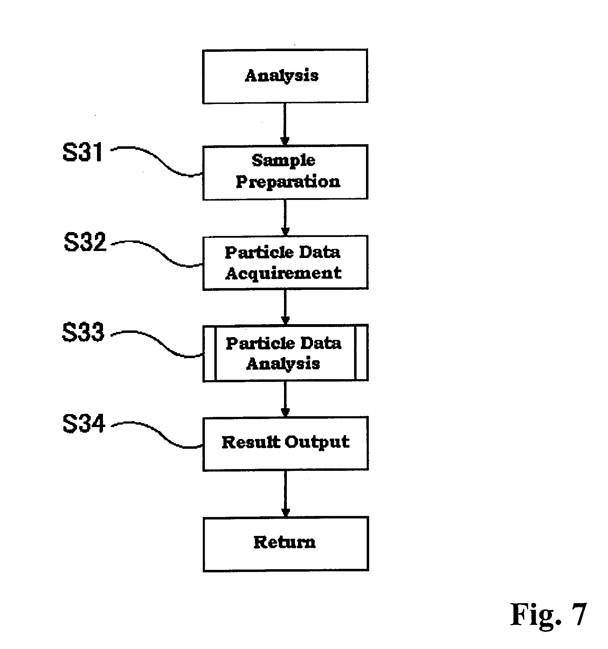

FIG. 7 is a flowchart showing respective steps of a control program for the analytical operation executed by the blood analyzer as the one embodiment of the present invention;
FIG. 8 is a flowchart showing respective steps of an analysis program executed by the blood analyzer as the one embodiment of the present invention;
FIG. 9 is an example of the two-dimensional scatter diagram expressed by indicating a distribution of particle data obtained by the blood analyzer as the one embodiment of the present invention along the side-scattered light intensity (Ssc) as abscissa and the fluorescence intensity (Fl) as ordinate;
FIG. 10 is another example of the two-dimensional scatter diagram expressed by indicating a distribution of particle data obtained by the blood analyzer as the one embodiment of the present invention along the Ssc as abscissa and the Fl as ordinate;
FIG. 11 is an example of the two-dimensional scatter diagram expressed by indicating a distribution of particle data obtained by the blood analyzer as the one embodiment of the present invention along the Ssc as abscissa and the forward-scattered light intensity (Fsc) as ordinate;
FIG. 12 is another example of the two-dimensional scatter diagram expressed by indicating a distribution of particle data obtained by the blood analyzer as the one embodiment of the present invention along the Ssc as abscissa and the Fsc as ordinate;
FIG. 13 is an example of the two-dimensional scatter diagram expressed by indicating a distribution of particle data obtained by the blood analyzer as the one embodiment of the present invention along the Fsc as abscissa and the Fl as ordinate;
FIG. 14 is another example of the two-dimensional scatter diagram expressed by indicating a distribution of particle data obtained by the blood analyzer as the one embodiment of the present invention along the Fsc as abscissa and the Fl as ordinate;
FIG. 15 is an example of the two-dimensional scatter diagram expressed by indicating a distribution of particle data obtained by the blood analyzer as the one embodiment of the present invention along the Ssc as abscissa and the Fl as ordinate;
FIG. 16 is a view for showing a condition where the results of specimen material analysis is displayed and output on a liquid crystal touch panel of the blood analyzer as the one embodiment of the present invention;
FIG. 17 is a further example of the two-dimensional scatter diagram expressed by indicating a distribution of particle data obtained by the blood analyzer as the one embodiment of the present invention along the Ssc as abscissa and the Fl as ordinate;
FIG. 18 is another example of the two-dimensional scatter diagram expressed by indicating a distribution of particle data obtained by the blood analyzer as the one embodiment of the present invention along the Ssc as abscissa and the Fl as ordinate; and
FIG. 19 is a further example of the two-dimensional scatter diagram expressed by indicating a distribution of particle data obtained by the blood analyzer as the one embodiment of the present invention along the Fsc as abscissa and the Fl as ordinate.

### DETAILED DESCRIPTION OF THE PREFERRED EMBODIMENTS

In the following, the analysis of a blood specimen according to the blood analyzer relevant to an embodiment of the present invention will be described, but it is to be noted that the invention is not limited thereto.

### Outline

The present embodiment of the blood analyzer is obtained by applying a flow cytometry. Human blood is used as a specimen. In the blood analyzer, a measurement sample is prepared by mixing first a predetermined amount of the specimen with a predetermined amount of each of reagents (hemolytic agent and staining solution). In the preparation of the measurement sample, red blood cells in a specimen are hemolyzed by the action of the hemolytic agent, whereby the malarial parasites parasitized in the red blood cells are liberated into the solution. The staining solution is added to the resulting solution, whereby the malarial parasites and the white blood cells are fluorescent-stained to obtain the measurement sample. Then, the measurement sample is allowed to flow into a flow cell; and a laser beam is irradiated on the measurement sample flowing through the flow cell. Thus, a scattered light and fluorescence emitted from the measurement sample on which the laser beam was irradiated are received to photoelectrically convert them by using an optical detection device such as a photodiode, and a photomultiplier tube, whereby the electrical signals corresponding to the intensity of a light is obtained. The electrical signals thus obtained are analyzed to count the white blood cell count and to detect malarial parasites. In addition to such operations as described above, the white blood cells in a specimen are differentiated into five types of monocyte, lymphocyte, neutrophil, eosinophil, and basophil. As the result of differentiating of white blood cells, counted results of various types of the white blood cells differentiated are obtained.

### Reagents

As the reagents (hemolytic agent and staining solution) used for preparing a measurement sample applied to a blood analyzer of the present example, those described hereunder are used.

"STROMATOLYSER 4DL" (manufactured by Sysmex Corporation) which is commercially available as a hemolytic agent applied for an automated blood cell analyzer is used. The hemolytic agent contains a surfactant (quaternary ammonium salt); and the red blood cells in blood are hemolyzed by the actions of the surfactant. Furthermore, "STROMATOLYSER 4DS" (manufactured by Sysmex Corporation) which is commercially available as a staining solution applied for an automated blood cell analyzer is used. The staining solution contains a polymethine-based fluorescent dye, so that the white blood cells and malarial parasites in blood are stained with the fluorescent dye.

### Blood analyzer

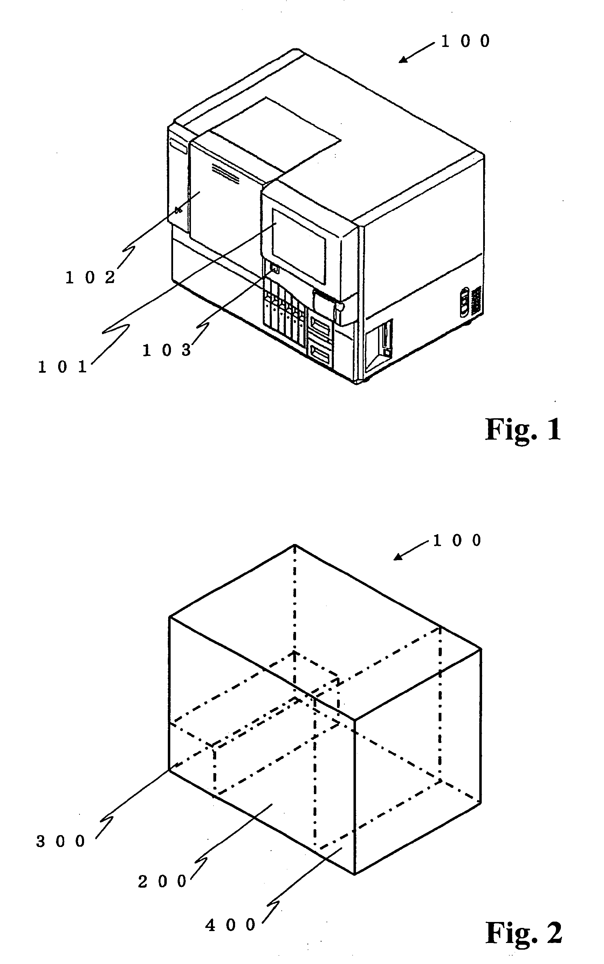

FIG. 1 is a view showing an appearance of a blood analyzer 100 wherein a liquid crystal touch panel 101 for inputting various types of data by an operator, or displaying and outputting measured results, a cover 102 for covering a sample preparation section 200 which will be mentioned hereinbelow, and a start switch 103 are arranged on the front surface of the apparatus. FIG. 2 is a view showing an internal constitution of the blood analyzer 100 wherein a space on the right side of the analyzer contains a control section 400 served for operations of the analyzer and analysis processing, while a space on the lower left side contains a detection section 300 for detecting signals from a measurement sample, and the remaining space contains a sample preparation section 200 for preparing the measurement sample.

In the following, the respective sections of the sample preparation section 200, the detection section 300, and the control section 400 will be described.

### Constitution of the sample preparation section 200

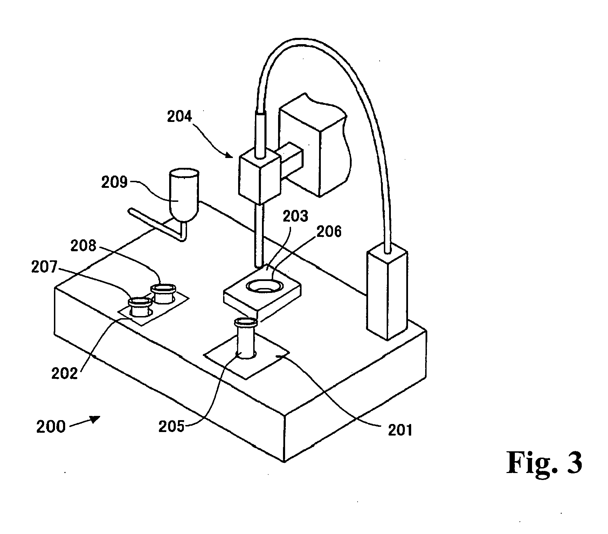

FIG. 3 is an explanatory view showing the sample preparation section 200. In the sample preparation section 200, a specimen setting section 201 is disposed on the front right side, a reagent setting section 202 is disposed on the front left side, and an incubator 203 is disposed on the rear side, respectively. A dispersing apparatus 204 is also disposed. When an operator removes the cover 102 of FIG. 1, the sample preparation section 200 appears. In the sample preparation section 200, it is constituted in such that a specimen container 205 containing a specimen is set in the specimen setting section 201. It is arranged in such that the reaction container 206 is set in the incubator 203. Moreover, it is constituted in such that a reagent container 207 containing a hemolytic agent and a reagent container 208 containing a staining solution are set in the reagent setting section 202. The incubator 203 is constituted so as to shake and stir the solution in the reaction container 206 set therein while maintaining the solution at a predetermined temperature. A dispensing apparatus 204 is constituted in such that a predetermined amount of a solution is sucked and discharged from the extreme end thereof; and further it is movable backward and forward, upwards and downwards, and rightwards and leftwards by a driving means (not shown). A sample container 209 is connected to a flow cell 301 of the detection section 300 which will be mentioned hereunder.

### Constitution of the detection section 300

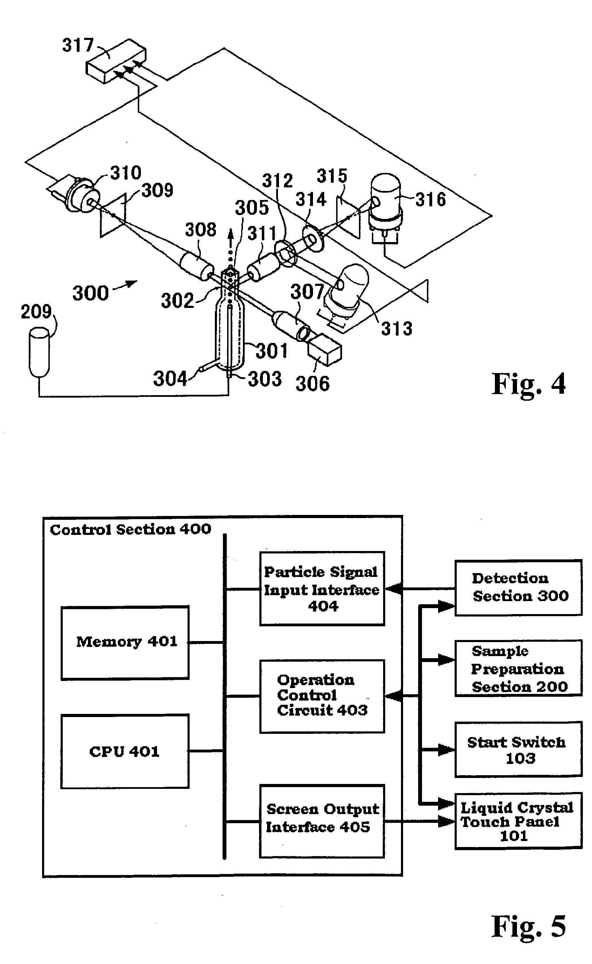

The detection section 300 has an optical system for detecting optical information from the respective particles in a measurement sample as electrical signals and a signal processing circuit 317 for processing the electrical signals detected to convert them into digital data corresponding to the respective particles. FIG. 4 is a view for explaining the detection section 300 and which shows principally the optical system wherein the detection section 300 has the flow cell 301 for flowing a measurement sample. The flow cell 301 is provided with an orifice part 302, a nozzle 303 for jetting upwards the measurement sample towards the orifice part, a sheath liquid feed opening 304, and a discharge port 305. The orifice part 302 is made from transparent and colorless inorganic glass. Further, the detection section 300 is provided with a laser source 306 for irradiating a laser beam. The laser source 306 is a red semiconductor laser source for outputting a laser beam of 633 nm wavelength. The detection section 300 involves further a condenser lens 307 for irradiating the laser beam output from the laser source upon the flow cell 301.

A condenser lens 308 is located at a position where a scattered light (forward scattered light) scattered substantially in a extension direction of the optical axis of the laser beam inputting to the flow cell 301 from the laser source 306 can be collected. The scattered light collected by the condenser lens 308 is input to a photodiode 310 through a pinhole 309. The photodiode 310 outputs electrical signals corresponding to the intensity of the forward scattered light received.

The condenser lens 311 is located at a position where the light emitted to the direction crosses substantially at right angles with respect to the optical axis of the laser beam input to the flow cell 301 from the laser source 306 can be collected. A dichroic mirror 312 reflects a scattered light (side scattered light) among the lights collected by a condenser lens 311 to allow fluorescence to transmit. A photomultiplier tube 313 receives the side scattered light reflected by the dichroic mirror 312 to output electrical signals corresponding to the intensity of the side scattered light received. On the other hand, the fluorescence transmitted through the dichroic mirror 312 inputs to another photomultiplier tube 316 through a filter 314 and another pinhole 315. The photomultiplier tube 316 outputs electrical signals corresponding to the intensity of the fluorescence received.

As described above, in the detection section 300, the forward scattered light, the side scattered light, and fluorescence emitted from a measurement sample containing particles such as malarial parasites, and blood cells are collected, whereby the electrical signals in response of the respective light intensities are obtained. The electrical signals output respectively from the photodiode 310, the photomultiplier tube 313, and the photomultiplier tube 316 are input to a signal processing circuit 317 to be processed, whereby they are converted to digital data.

### Constitution of the control section 400

FIG. 5 is a block diagram showing the constitution of the control section 400 and a relationship between the control section 400 and respective parts of the apparatus wherein the control section 400 is provided with a memory 401, a central processing unit (CPU) 402, an operation control circuit 403, a particle signal input interface 404, and a screen output interface 405. The memory 401 stores an analysis program as to the analysis of the signals obtained from a measurement sample, an analysis operation control program for controlling a series of operations in the respective parts of the apparatus for analyzing a specimen, and various types of image data to be displayed on the liquid crystal touch panel 101. Furthermore, the data obtained by the signal processing circuit 317 of the detection section 300, and the results processed by the analysis program are stored in the memory 401. The CPU 402 executes the analysis program or the analysis operation control program read out from the memory 401. The operation control circuit 403 treats the input/output of the control signals for controlling operations in the respective parts of the blood analyzer 100. The particle signal input interface 404 accepts the input of the data relating to particles in the measurement sample obtained by the signal processing circuit 317 of the detection section 300. The analyzed results according to the analysis program or various types of image data are output to the liquid crystal touch panel 101 through the screen output interface 405.

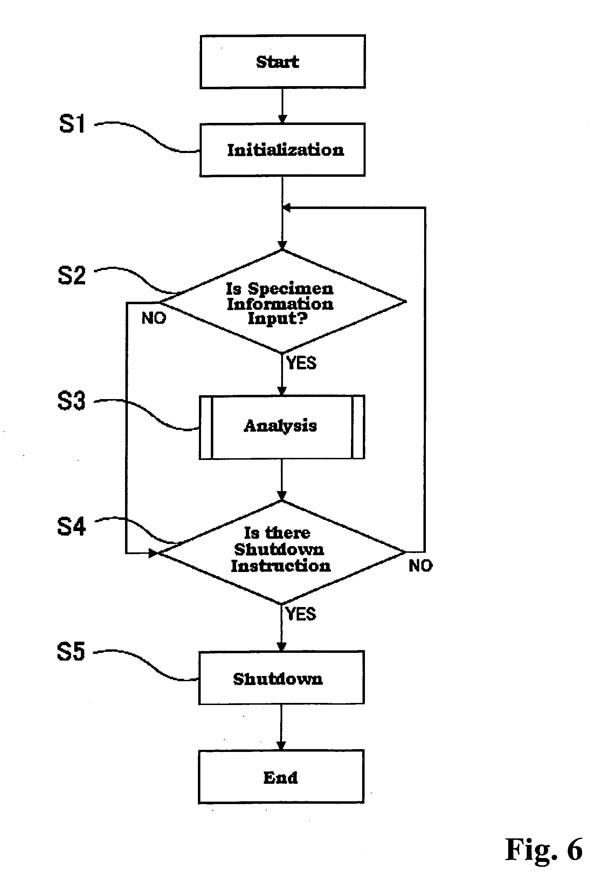

In the following, operations of the blood analyzer 100 will be described. FIG. 6 is a flowchart showing the whole control of the blood analyzer 100 according to an analysis operation control program. When the blood analyzer 100 is powered on in a condition where the reagent container 207 containing a hemolytic agent and the other reagent container 208 containing a staining solution are respectively set in the reagent setting section 202 of the sample preparation section 200, the respective processing steps from a step S 1 to a step S5 which will be described hereinafter are executed.

Step S1: The initialization of the blood analyzer 100 is made. As a result, an operation for returning the dispensing apparatus 204 of the sample preparation section 200 to the initial position, and initialization of a program stored in the control section 400 are carried out.

Step 2: The input of specimen information by an operator is accepted. The operator uses the liquid crystal touch panel 101 in the case where the specimen information is input wherein an identification number for identifying the specimen to be analyzed thereafter is input. The specimen identification number input is stored in the memory 401 of the control section 400. In the present step, when it is input within a predetermined period of time after completion of the initialization in the step S1, the process proceeds to a step S3. If no input is made within the predetermined period of time, it proceeds to a step S4.

Step 3: Analysis of a specimen is implemented. The operator sets the specimen container 205 containing the specimen corresponding to the specimen number in the specimen setting section 201 of the sample preparation section, and then, the operator pushes the start switch 103, whereby the analysis operation control program runs to execute automatically a series of operations in a step S31 (preparation of a measurement sample), a step S32 (acquirement of particle data), a step S33 (analysis of particle data), and a step S34 (output of analysis results). The operations of the respective parts of the apparatus according to the steps S31, S32, S33, and S34 will be described in detail hereinafter.

Step S4: It is determined whether or not an instruction for shutting down the blood analyzer 100 is input with the instruction for shutting down the blood analyzer is made by using the liquid crystal touch panel 101 by the operator. When it is determined that the instruction for shutting down the blood analyzer is not input for a certain period of time, it returns to the step S2, and it waits that the specimen identification number of the following specimen to be analyzed is input by the operator. On the other hand, when the instruction for shutting down the apparatus is input for the certain period of time, the process proceeds to a step S5.

Step S5: The blood analyzer 100 is shut down wherein the dispensing apparatus 204, the reaction container 206, and a hydraulic circuit extending from the sample container 210 to the discharge port 305 of the flow cell 301 are washed, and then, the blood analyzer 100 is automatically powered off.

### Details of the step S3 (analysis)

In the following, the above-described step S3 (analysis) will be described in more detail. The step S3 is composed of a step S31 (preparation of a measurement sample), a step S32 (acquirement of particle data), a step S33 (analysis), and a step S34 (output of analyzed results), respectively.

### Step S31 (Preparation of a measurement sample)

In the step S31, the sample preparation section 200 is controlled, and a measurement sample is prepared. Operations of the sample preparation section 200 in the step S31 are explained by the use of FIG. 3. First, the dispensing apparatus 204 sucks 0.882 mL of a hemolytic agent from the reagent container 207 of the reagent setting section 202. Then, the dispensing apparatus 204 sucks 18 µL of a specimen from the specimen container 205 set in the specimen setting section 201. Thereafter, the hemolytic agent and the specimen sucked as described above are discharged in the reaction container 206. As a result, the specimen is mixed with the hemolytic agent in the reaction container 206. Furthermore, the dispensing apparatus 204 sucks 18 µL of a staining solution from the reagent container 208 of the reagent setting section 202; and then it is discharged into the reaction container 206 containing the specimen and the hemolytic agent. Thereafter, the incubator 203 agitates the mixture of the specimen, the hemolytic agent, and the staining solution for 14 seconds while maintaining the liquid temperature of the mixture contained in the reaction container 206 at 40°C. Thus, the red blood cells in the specimen are hemolyzed to liberate the malarial parasites parasitized in the red blood cells. On the other hand, the white blood cells in the specimen and the malarial parasites liberated are fluorescence-stained with the staining solution. The dispensing apparatus 204 sucks the measurement sample thus prepared to supply it to the sample container 209. The measurement sample supplied to the sample container 209 is allowed to flow into the flow cell 301 of the detection section 300.

### Step S32 (Acquirement of particle data)

In the step S32, the detection section 300 is controlled, and electrical signals reflecting the characteristics of respective particles are detected from a measurement sample containing particles such as white blood cells and malarial parasites. The operations of the detection section 300 in the step S32 will be described with reference to FIG. 4. As described above, when the measurement sample is supplied to the sample container 233, the measurement sample is guided to the nozzle 303 by the operations of a pump and valves (not shown). Then, the measurement sample is discharged to the flow cell 301 from the nozzle 303. At the same time of the discharge, a sheath liquid is supplied from the sheath liquid container (not shown) to the flow cell 301 through the sheath liquid feed opening 304. As a result, the measurement sample is enveloped by the sheath liquid in the flow cell 301; and further, it is narrowed thinly by the orifice section 302 to be flowed. When the flow of the measurement sample is allowed to be narrowed thinly, the particles such as white blood cells, and malarial parasites contained in the measurement sample can be aligned in a row to be flowed to the orifice section 302. With respect to the measurement sample flowing through the orifice section 302, the laser beam output from the laser source 306 is irradiated after concentrated by the condenser lens 307.

The forward scattered light emitted from the particles in the measurement sample, by which the laser beam has been received, is condensed by the condenser lens 308. Then, the forward scattered light passed through the pinhole 309 is received by the photodiode 310 to be photoelectrically converted wherein the photodiode 310 outputs electrical signals (forward scattered light signals) corresponding to the intensities of the forward scattered lights.

The side scattered lights emitted from the particles in the measurement sample by which a laser beam has been received are condensed by the condenser lens 311. Then, the side scattered lights condensed are reflected by the dichroic mirror 312, and the lights reflected are received by the photomultiplier tube 313 to be photoelectrically converted wherein the photomultiplier tube 313 outputs electrical signals (side scattered light signals) corresponding to the intensities of the side scattered lights.

The fluorescence emitted from the particles in the measurement sample, by which a laser beam has been received, is condensed by using the condenser lens 311. Then, the fluorescence transmits the dichroic mirror 312, and it is received by the photomultiplier tube 316 to be photoelectrically converted through the filter 314 and the pinhole 315 wherein the photomultiplier tube 316 outputs an electrical signal (fluorescent signal) corresponding to the intensity of the fluorescence.

The forward scattered light signals output from the photodiode 310, the side scattered light signals output from the photomultiplier tube 313, and the fluorescent signal output the photomultiplier tube 316 are input to the signal processing circuit 317, respectively. In the signal processing circuit 317, first, the respective signals input are amplified. In any of the forward scattered light signals, the side scattered light signals, and the fluorescent signal, a part wherein particles are detected in a series of signal waveforms amplified produces a pulsed waveform wherein the peak value of the pulses is obtained in the respective signals. These peak values are A/D-converted to obtain digital data indicating signal intensities in each particle. The intensity of the forward scattered light reflects a dimension of a particle contained in the measurement sample. The intensity of the side scattered light reflects internal information such as a density, and a structure of the interior of the above-described particles, or a surface condition of a particle. The intensity of the fluorescence reflects a degree of staining in a particle stained with a fluorescent dye.

In the blood analyzer 100, detection sensitivity is set in such that intensities of such signals are not stored as the digital data with respect to a signal having a distinctively smaller intensity than that obtained from particles such as white blood cells, and malarial parasites, or another signal having a distinctively larger intensity than that obtained from the particles. The signals as mentioned above are noise signals. Under the circumstances, by preventing these signals from being stored as digital data and used as the object to be analyzed which will be mentioned hereunder, it is possible to increase efficiency in data processing.

Concerning each of the forward scattered light intensities, the side scattered light intensities, and fluorescent intensities, the detection sensitivity is arranged in such that a threshold value is given to the upper and lower limits of the signal intensity to be the object of A/D conversion. In the blood analyzer 100, the lower limit of the signal intensity is made to be 0, while the upper limit thereof is made to be 255 wherein the intensities of signals within a detection sensitivity range are stored as digital data having any value of 256 integers extending from 0 (the minimum value) to 255 (the maximum value). It is to be noted herein that when the detection sensitivity is excessively highly set, signal intensities obtained from large-sized white blood cells are out of the range, so that it deviates from the object to be detected, whereby it becomes difficult to count correctly the white blood cell count. On the other hand, when the sensitivity is excessively lowly set, differentiating of white blood cells based on signal intensities becomes difficult, because differences in fine signal intensities which are derived from individual white blood cells cannot be discriminated, even if the whole types of the white blood cells can be detected. Accordingly, the detection sensitivity of the blood analyzer 100 is adjusted to a degree wherein the whole of the white blood cells may be detected, and further the white blood cells can be differenttiated into subsets.

As described above, the forward scattered light intensity (hereinafter, referred to as "Fsc"), the side scattered light intensity (hereinafter, referred to as "Ssc"), and the fluorescence intensity (hereinafter, referred to as "Fl") corresponding to the respective particles in a measurement sample are obtained. The Fsc, the Ssc, and the Fl are stored in the memory 401 of the control section 400 as the data associated with each particle. In the blood analyzer 100 of the present example, the Fsc, the Ssc, and the Fl corresponding to about 65 thousands of particles are stored in a single specimen analysis.

### Step S33 (Analysis of particle data)

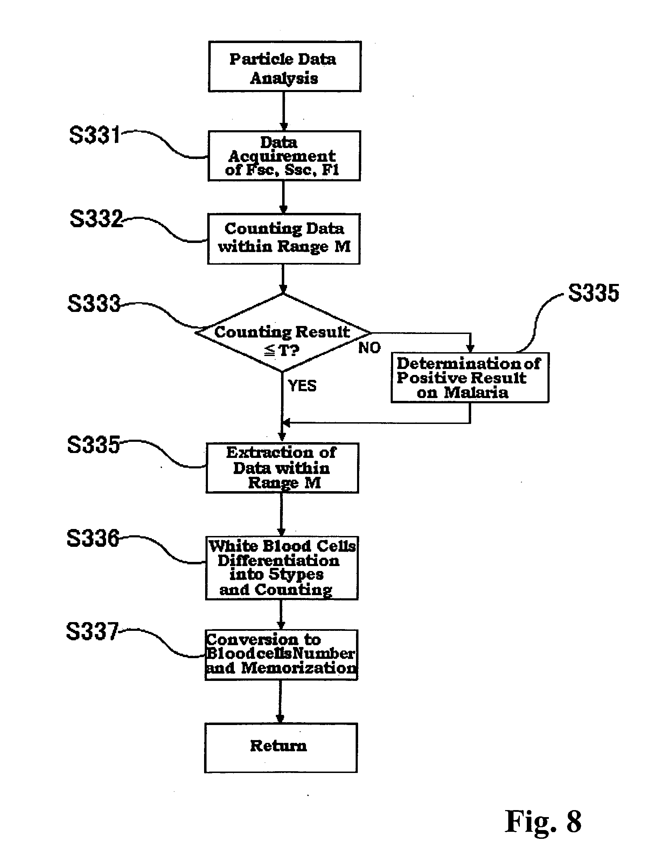

The Fsc, Ssc, and Fl data stored in the memory 401 in each particle are analyzed by the analysis program which has been stored previously in the memory 401. The respective steps of the analysis program, which are read out by the CPU 402 to be executed, will be described by the use of the flowchart of FIG. 8.

Step S331: The Fsc, Ssc, and Fl data corresponding to the respective particles in a measurement sample are acquired from the memory 401.

Step S332: Data of the particles the Fsc, Ssc, and Fl of which are within a predetermined range M is counted among the data acquired in the step S331. The range M means the one arranged in such that it includes the Fsc, Ssc, and Fl data obtained from malarial parasite, while it does not include the Fsc, Ssc, and Fl data obtained from the other particles such as white blood cells. The data which defines the range has previously been stored in the memory 401.

Step S333: The counted results of the particle data in the step S332 are compared with a predetermined value T. As a result of the comparison, when the counted results are larger than the predetermined value T, it is determined that there is a possibility of the presence of malarial parasite; and the process proceeds to a step 334. On the other hand, when the counted results are equal to or smaller than the predetermined value T, it is determined that the number of the particles is insufficient for suspecting the infection by malarial parasite; and it proceeds to a step S335.

Step S334: The determination result that "there is a possibility of the presence of malarial parasite" is allowed to correlate with the specimen identification number, the resulting data is stored in the memory 401, and then, the process proceeds to a step S335.

Step S335: The data of the particles, which are not included in the above-described range M, is extracted from the data acquired in the step S331. This data is considered to be the one corresponding to the particles other than those of malarial parasite, i.e. white blood cells (monocyte, lymphocyte, neutrophil, eosinophil, and basophil), and debris of hemolyzed red blood cells.

Step S336: The data corresponding to monocyte, lymphocyte, neutrophil, eosinophil, and basophil is specified from the data of the particles extracted in the step S335 based on the values of Ssc and Fl, whereby the number of particles is counted, respectively. The ranges of Ssc and Fl corresponding to respective white blood cells are determined empirically based on the Ssc and the Fl obtained from each specimen containing monocytes, lymphocytes, neutrophils, eosinophils, and basophils, respectively; and the data for defining these ranges has been previously stored in the memory 401.

Step S337: The numbers of respective particles of the monocytes, lymphocytes, neutrophils, eosinophils, and basophils counted in the step S336 are converted into the numbers of blood cells in the whole blood based on the multiplying factor with which a specimen is to be diluted, and the volume of the measurement sample discharged into the flow cell 301 in the preparation of a sample for preparation, whereby the converted results of the numbers of blood cells corresponding to the respective white blood cells are allowed to correlate with the specimen identification number, and the resulting data is stored in the memory 401. Furthermore, the white blood cell count (the total white blood cell count) is calculated from the sum of the number of various white blood cells, the resulting data is allowed to correlate with a specimen identification number, and the result is stored in the memory 401.

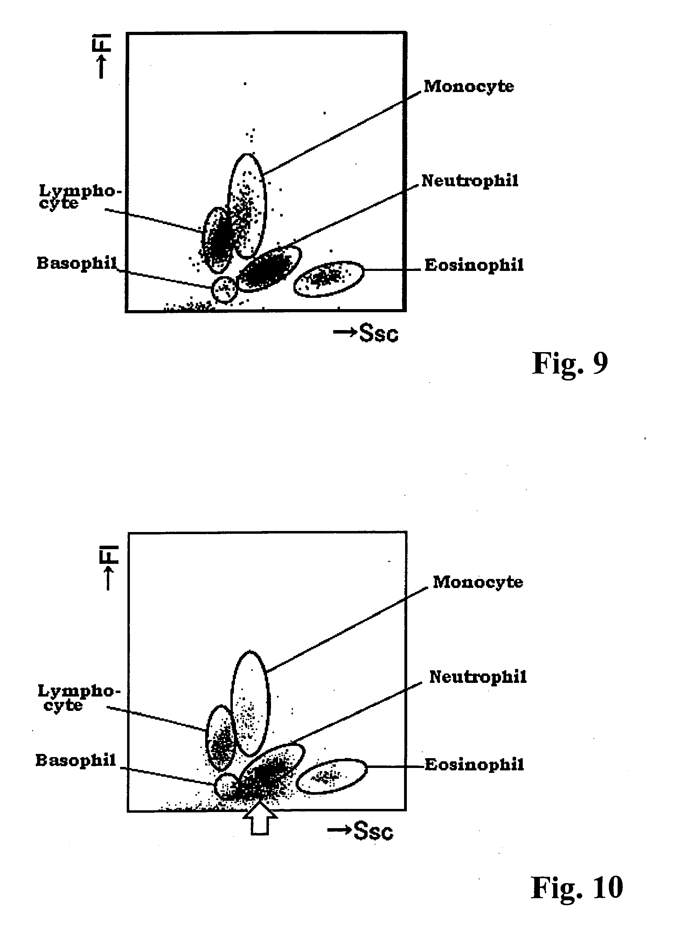

In the following, the counting of white blood cells, the differentiating thereof, and a method for determining the presence of malarial parasite in the blood analyzer 100 of the present example will be described in detail. FIG. 9 is a two-dimensional scatter diagram expressed by the data of various particles acquired from a measurement sample which contains no malarial parasite in the step S331 along Ssc as abscissa and Fl as ordinate. In any of FIG. 9 showing the two-dimensional scatter diagram used for the explanation of the blood analyzer 100 as well as the undermentioned FIGs. 10, 11, 12, 13, 14, 15, 16, 17, 18, and 19, the minimum value on either of the axes is 0, while the maximum value on either of the axes is 255; the both axes constituting the two-dimensional scatter diagram; wherein dots are indicated at the positions on the two-dimensional coordinate corresponding to the values which are involved in the respective particle data in which a value of coordinate increases towards the right side on the abscissa, while a value of coordinate increases towards the upper side on the ordinate.

In the two-dimensional scatter diagram of FIG. 9, dots corresponding to various types of white blood cells (monocytes, lymphocytes, neutrophils, eosinophils, and basophils) form clusters, respectively. Accordingly, the data of particles corresponding to various types of white blood cells can be counted corresponding to the ranges of Ssc and Fl involved in the clusters of these various white blood cells. Moreover, when the counted data is summated, the data of particles corresponding to white blood cells can be counted. However, when a malarial parasite exists in a measurement sample, the dots corresponding to malarial parasites appear so as to expand over a position where they overlap a cluster of the dots corresponding to neutrophils as shown by the arrow in FIG. 10. In other words, there is a part wherein the range of Ssc and Fl obtained from the malarial parasites overlaps the range of Ssc and Fl obtained from the neutrophils. Accordingly, it is difficult to discriminate white blood cells from malarial parasites based only on the Ssc and the Fl and to count them, respectively. In FIGS. 9 and 10, the dots appearing on the left and downward direction of the appearing position of the dots corresponding to basophils are principally derived from debris of the hemolyzed red blood cells.

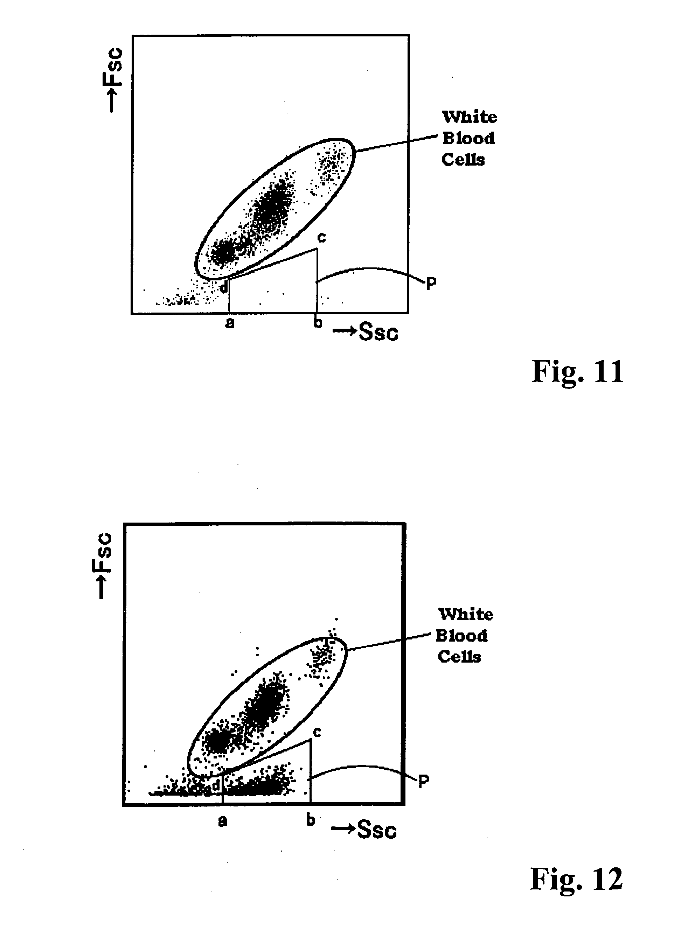

FIG. 11 is a two-dimensional scatter diagram expressed by the data of various particles acquired from a measurement sample which contains no malarial parasite in the step S331 along Ssc as abscissa and Fsc as ordinate wherein the dots corresponding to white blood cells form a cluster. On the other hand, FIG. 12 is a two-dimensional scatter diagram prepared from a measurement sample containing malarial parasites in accordance with the same manner as that of FIG. 11 wherein a cluster of the dots corresponding to the malarial parasites appears on a position where it is apparently separated from the cluster of the dots corresponding to white blood cells. Thus, such a range of Ssc and Fsc where the dots corresponding to white blood cells do not appear, but the dots corresponding to malarial parasites appear can be specified. This range is shown in FIG. 12 in the form of a quadrangular region P having peaks a, b, c, and d wherein the positions on two-dimensional coordinates of each peak are a (90, 0), b (170, 0), c (170, 60), and d (90, 30), respectively, in which X-axis and Y-axis correspond to Ssc and Fsc. Furthermore, the minimum value and the maximum value are arranged to be 0 and 255 with respect to the both axes, respectively, which corresponding to values of the optical signal intensities obtained in each particle as a result of A/D conversion in the signal processing circuit 403. In FIGS. 11 and 12, the dots appearing on the lower left side of the appearing position of the dots corresponding to the particle data corresponding to white blood cells are derived principally from the debris of hemolyzed red blood cells.

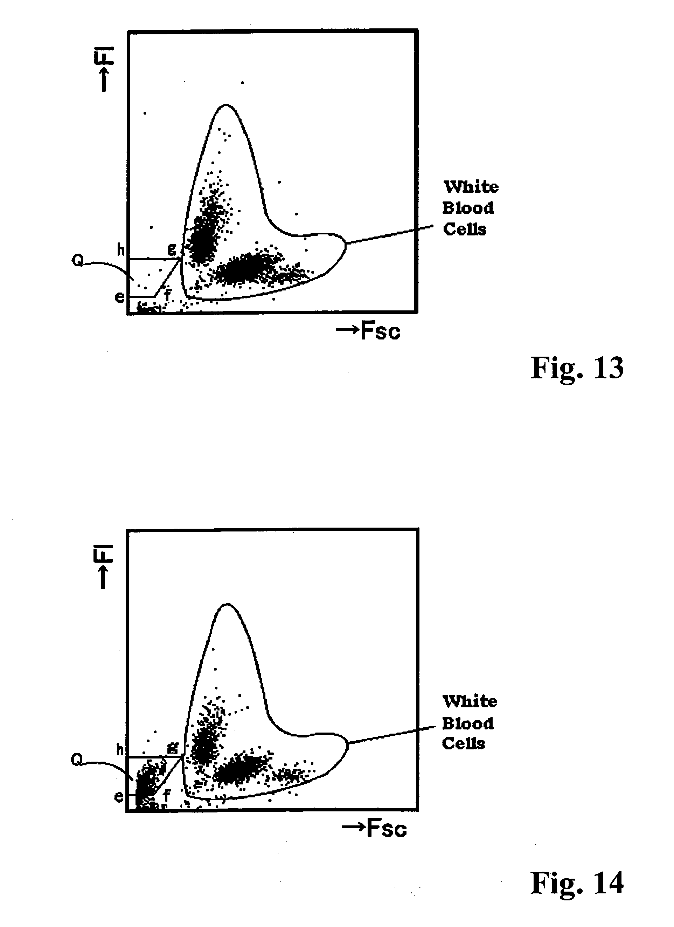

FIG. 13 is a two-dimensional scatter diagram expressed by the data of various particles acquired from a measurement sample which contains no malarial parasite in the step S331 along Fsc as abscissa and Fl as ordinate wherein the dots corresponding to white blood cells form a cluster. On the other hand, FIG. 14 is a two-dimensional scatter diagram prepared from a measurement sample containing malarial parasites in accordance with the same manner as that of FIG. 13 wherein a cluster of the dots corresponding to the malarial parasites appears on a position where it is away from the cluster of the dots corresponding to white blood cells. Thus, such a range of Fsc and Fl where the dots corresponding to white blood cells do not appear, but the dots corresponding to malarial parasites appear can be specified. This range is indicated in FIG. 14 in the form of a quadrangular region Q having peaks e, f, g, and h wherein the positions on secondary coordinates of each peak are e (0, 16), f (30, 16), g (50, 50), and h (0, 50), respectively, in which X-axis and Y-axis correspond to Fsc and Fl. Furthermore, the minimum value and the maximum value are arranged to be 0 and 255 with respect to the both axes, respectively, which are corresponding to values of the optical signal intensities obtained in each particle as a result of A/D conversion in the signal processing circuit 403. In FIGS. 13 and 14, the dots appearing on the lower left side of the appearing position of the dots corresponding to the particle data corresponding to white blood cells and downward of region Q are derived principally from the debris of hemolyzed red blood cells.

On the basis of these results and facts, it is considered that in the blood analyzer 100 of the present example, the particles corresponding to the dots appearing in common with the regions P and Q are malarial parasites; and the above-described region M is determined as the range of Ssc, Fl, and Fsc involved in these particles. As described above, the counted result of particles in the case where the Fsc, the Ssc, and the Fl are in the predetermined range M is compared with a predetermined value T in the step S333. In the case where the counted result is equal to or less than the predetermined value, the data of particles included in the range M is insufficient to suspect infection by malarial parasites, so that the result obtained is considered to be derived from noise signals, the debris of hemolyzed red blood cells, or the like. The predetermined value T is empirically determined from the result of counting particles existing in the range M; the particles determined by measuring a measurement sample which contains no malarial parasite in many times wherein the predetermined value T is set to be 10.

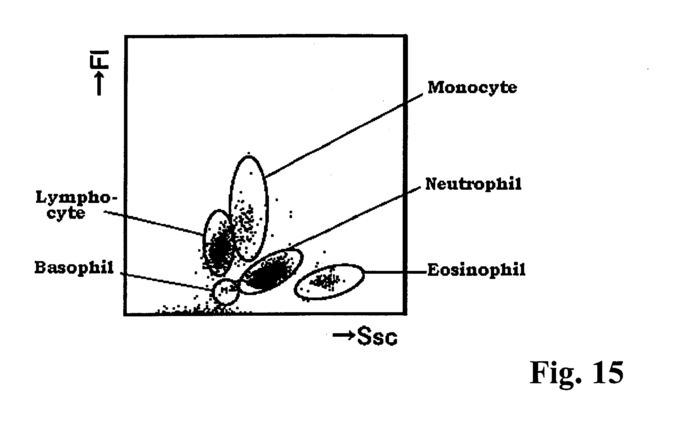

FIG. 15 is a two-dimensional scatter diagram expressed by the data extracted in the step S335 along Ssc as abscissa and Fl as ordinate. The resulting diagram corresponds to that wherein the dots corresponding to malarial parasites are removed, so that it becomes similar to as a two-dimensional scatter diagram (e.g. FIG. 9) prepared on the basis of the data obtained from a measurement sample containing no malarial parasite. Accordingly, the data extracted in the step S335 can be counted as the particle data corresponding to various types of white blood cells corresponding to the range of Ssc and Fl without influence by the particle data corresponding to malarial parasite.

Various types of the two-dimensional scatter diagrams, which have been used for the above explanation, are prepared also in the analysis of a series of particle data in the step S33. The two-dimensional scatter diagrams prepared are allowed to correlate with a specimen identification number; and the results obtained are stored in the memory 401 as in the case of the other analysis results, i.e. the counted results of white blood cells and a differentiated variety of white blood cells, further the determination results as to the presence of malarial parasite.

### Step S34 (Output of analysis results)

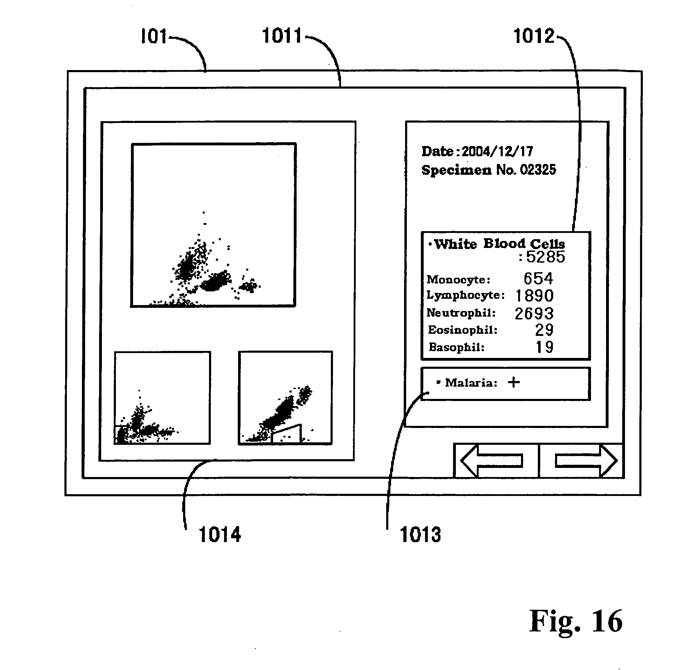

Various types of analysis results such as the counted results of white blood cells, the differentiated counted results of the variety of white blood cells, and the determination results as to the presence of malarial parasite obtained in the step S33 and stored in the memory 401 as well as the two-dimensional scatter diagrams prepared in the course of the analysis are output to the liquid crystal touch panel 101 as a screen for displaying the results. FIG. 16 shows an example of the screen wherein a screen 1011 displayed on the liquid crystal touch panel 101 includes a column 1012 for displaying the white blood cell count (total white blood cell count) and the number of various white blood cells which is classified into the respective numbers, i.e., classified into five types of monocytes, lymphocytes, neutrophils, eosinophils, and basophils; a column 1013 for displaying the determination results of presence of malarial parasite; and a column 1014 for displaying the same two-dimensional scatter diagrams as those shown in FIG. 9 or 10, FIG. 11 or 12, and FIG. 13 or 14. The present example of FIG. 16 shows the determination result wherein malarial parasites exist in a specimen. When the result counted in the step S333 is equal to or smaller than the predetermined value T, it is determined that the number is insufficient for suspecting infection by malarial parasite, so that a sign (-) for indicating negative with respect to malarial parasite is assigned as a default value. On the other hand, when the result counted in the step S333 is larger than the predetermined value T, it is determined that there is a possibility of the presence of malarial parasite and further, when the determination result is stored in the memory 401 in the step S334, a sign (+) for indicating positive with respect to malarial parasite is assigned in the column 1013 as shown in FIG. 16.

As described above, according to the blood analyzer 100, since information suggesting the presence of malarial parasite is displayed on the screen in addition to the counted results of white blood cells and differentiating information of white blood cells (the numbers of various white blood cells in this case), an operator for the analyzer of the present example may easily determine whether or not malarial infection should be taken into consideration as a cause for the following behaviors in the case where the white blood cell count in a patient exhibits abnormal or changing behavior, or the case where the number or the ratio of a specific type of white blood cells in the patient exhibits abnormal or changing behavior. For example, it is possible to monitor the number of neutrophils particularly closely related to infection disease among white blood cells, whereby useful information can be obtained in the case where diagnosis is conducted upon malarial infection together with the determination result of the presence of malarial parasite.

### Examples of analysis results of patient specimens

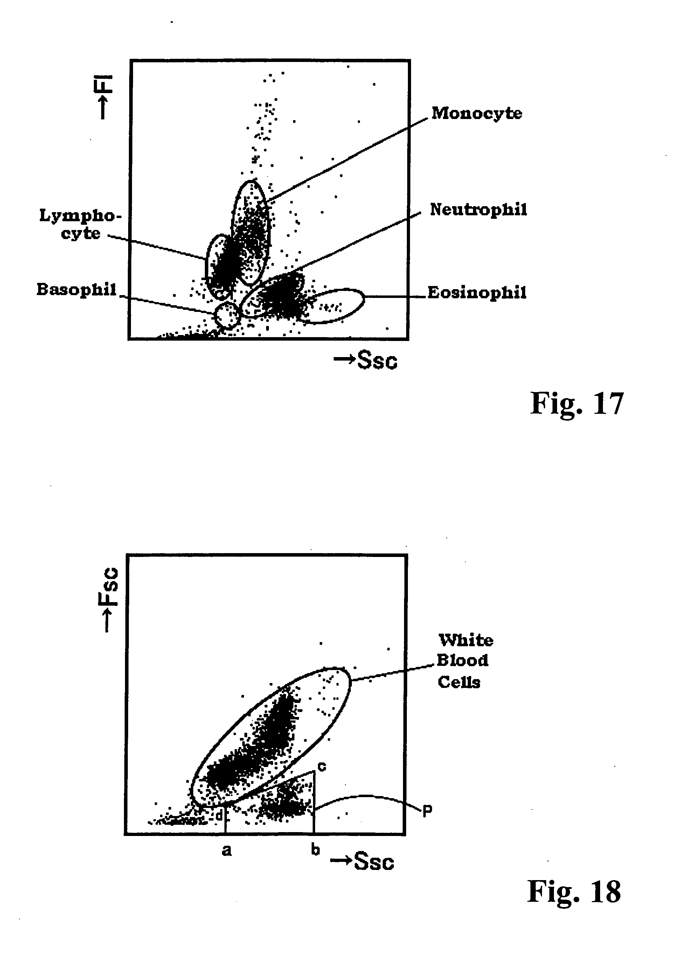

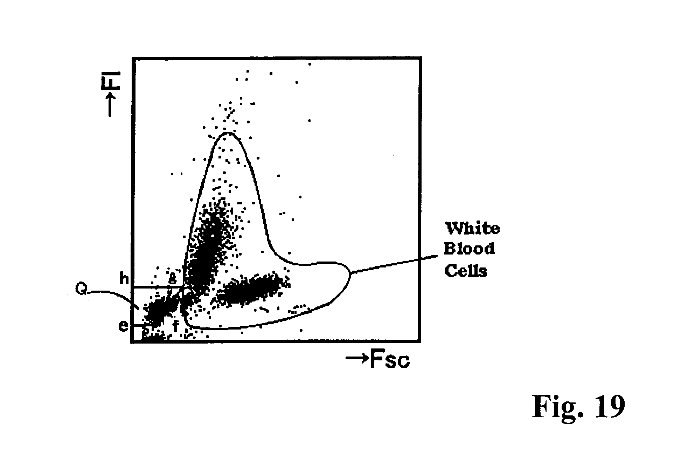

FIG. 17 is a two-dimensional scatter diagram expressed by the particle data obtained by applying the blood collected from a malarial patient as a specimen and analyzing the specimen by the use of the blood analyzer 100 along Ssc as abscissa and Fl as ordinate. In FIG. 17, the cluster of dots of particle data corresponding to malarial parasites appears at the position overlapping the cluster of dots of the particle data corresponding to neutrophils as in the case of FIG. 10. Furthermore, a two-dimensional scatter diagram is shown as FIG. 18 with respect to the same particle data as described above wherein Fsc is plotted as ordinate, while Ssc is plotted as abscissa. Another two-dimensional scatter diagram is shown as FIG. 19 with respect to the same particle data as described above wherein Fl is plotted as ordinate, while Fsc is plotted as abscissa. In FIG. 18, the cluster of dots of the particle data corresponding to malarial parasite appears in the region P as in the case of FIG. 12. On the other hand, in FIG. 19, the cluster of dots of the particle data corresponding to malarial parasite appears in the region Q as in the case of FIG. 14. The results obtained by analyzing the present specimen in the application of the blood analyzer 100, and the results obtained by visual observation under microscope (visual counting method by using Tuerk's solution) with respect to the present specimen are shown in the following table 1. The results of the visual observation are those obtained in such a manner that 200 white blood cells in a specimen are observed to differentiate them and to count them; and the counted results are converted into a count value per 1 µL of the specimen. Moreover, a ratio of the whole white blood cell count is calculated with respect to various types of the white blood cells differentiated in addition to the counted results.

**Table 1**

| | Blood analyzer 100 (unit: number/µL) | Visual Observation (unit: number/µL) |
|---|---|---|
| Total White Blood Cells Number | 5230 | 5500 |
| Monocyte | 650 (12. 4%) | 550 (10%) |
| Lymphocyte | 1790 (34. 2%) | 2090 (38%) |
| Neutrophil | 2740 (52. 4%) | 2805(51%) |
| Eosinophil | 25(0.5%) | 27. 5 (0. 5%) |
| Basophil | 25(0.5%) | 27.5(0.5%) |
| Malarial Parasite | Positive | Positive |

As shown in table 1, the results analyzed by the blood analyzer 100 are substantially the same as the results of the visual observation under microscope. From these results, it is found that the blood analyzer 100 can perform counting of the white blood cell and differentiating thereof in high precision, even if such specimen containing the red blood cells infected by malarial parasite is analyzed.

### Comparison with control method

A plurality of specimens are analyzed by applying the above-described blood analyzer 100; and the count results of white blood cells, the count results of various types of differentiated white blood cells, and the determination results of the presence of malarial parasite (Positive/Negative) which are obtained as a result of the analysis are compared with those of a control method. Total 287 specimens including 28 whole blood specimens which have been confirmed to contain the red blood cells infected by malarial parasite and 259 whole blood specimens which have been confirmed to contain no red blood cell infected by malarial parasite as a result of the visual observation under microscope are used. The control method is executed by the visual observation under microscope. As a result of the comparison, the respective specimens exhibit a favorable correlation between the analysis method according to the blood analyzer 100 and the control method with respect to the count results of white blood cells, and the count results of the variety of differentiated white blood cells. Furthermore, the results of the analysis method according to the blood analyzer 100 coincides with those of the control method as to almost all of the specimens with respect to the determination of the presence of malarial parasite as shown in the following table 2.

**Table 2**

| | | Results by Control Method (Visual Observation) | |
|---|---|---|---|
| | | Positive | Negative |
| Results by Blood analyzer 100 | Positive | 22 | 4 |
| | Negative | 6 | 255 |

As described above, in the blood analyzer 100, analysis is effected by irradiating the particle in a measurement sample with a light, and applying data indicating the intensity of a first scattered light scattered from the particles towards the direction of a predetermined range, data indicating the intensity of a second scattered light scattered towards the direction of another range different from that of the first scattered light, and data indicating the intensity of fluorescence emitted from the particles, whereby counting of white blood cells, differentiating thereof into subsets, and detection of malarial parasite can be made simply at high precision. Particularly, even if the case where malarial parasites exist, differentiating of white blood cells can be made at high precision.

According to the above-described blood analyzer 100; although a count of white blood cells (the whole white blood cell count) is carried out by totalizing the numbers of various white blood cells obtained together as a result of differentiating of the white blood cells, it is not necessarily required to count the white blood cells accordingly. For example, when the respective particle data acquired in the step S331 is analyzed on the basis of Ssc and Fsc, white blood cell data can be discriminated from the other particle data such as that of malarial parasite as shown in FIGS. 11 and 12. Hence, the data of white blood cells thus discriminated may be counted, and based on the result, the white blood cell count may be calculated. Otherwise, when the respective particle data acquired in the step 5331 is analyzed on the basis of F1 and Fsc, white blood cell data can be discriminated from the other particle data such as that of malarial parasite as shown in FIGS. 13 and 14. Hence, the data of white blood cells thus discriminated may be counted, and based on the result, the white blood cell count may be calculated.

Moreover, according to the above-described blood analyzer 100, although the number of various types of differentiated white blood cells is obtained as the differentiating information of white blood cells, it is not necessarily required to take such procedure as described above, but it may obtain, for example, a proportion of various types of white blood cells may be determined with respect to the total white blood cell count as the differentiating information of the white blood cells.

The blood analyzer may be constituted in such that neither white blood cell differentiating nor counting the differentiated white blood cells is made, but the white blood cells are simply counted in addition to determination of the presence of malarial parasite. According to one mode, when an analysis is made by the use of data indicating the intensity of a scattered light scattered in the direction of a predetermined range from particles in a measurement sample to which a light has been irradiated in a flow cell and data indicating the intensity of the fluorescence emitted from the particles, the counting of white blood cells and the detection of malarial parasite can be simply and precisely effected. For example, when the Fl and the Fsc obtained from the measurement sample are used as shown in FIGS. 13 and 14 in the blood analyzer 100, the particle data corresponding to white blood cells can be discriminated from the particle data corresponding to malarial parasite to be counted on the basis of the ranges of the Fl and the Fsc. In this case, the optical information detected from the particles in a measurement sample is fluorescence and a forward scattered light; and in this case, there is no need of detecting a side scattered light. Accordingly, optical parts for detecting the side scattered light such as the photomultiplier tube 313 become unnecessary, whereby the constitution of such an apparatus may be more simplified.

Moreover, when an analysis is made by the use of data indicating the intensity of a first scattered light scattered in the direction of a predetermined range from particles in the measurement sample to which a light has been irradiated in a flow cell and data indicating the intensity of a second scattered light scattered in the direction of a different range from that of the first scattered light, the counting of white blood cells and the detection of malarial parasite can be simply and precisely effected. For example, when the Fsc and the Ssc obtained from the measurement sample are used as shown in FIGS. 11 and 12 in the blood analyzer 100, the particle data corresponding to white blood cells can be discriminated from the particle data corresponding to malarial parasite to be counted on the basis of the ranges of the Fsc and the Ssc. In this case, the optical information detected from the particles in a measurement sample is a forward scattered light and a side scattered light; and in this case, there is no need of detecting fluorescence. Accordingly, optical parts for detecting the fluorescence such as the photomultiplier tube 316 become unnecessary, whereby the constitution of the detection section 300 may be more simplified. Furthermore, staining treatment of a specimen with a staining solution containing a fluorescent dye becomes unnecessary, whereby reduction in the cost of reagents can be achieved, besides the constitution of the sample preparation section 200 may be more simplified. In addition, it has been heretofore required to wash sufficiently a fluid system in an automatic analyzer, because if the fluorescent dye in the staining solution used remains in the fluid system of the apparatus, there is a case where the following measured results are adversely affected thereby. However, if application of a staining solution is not required, a washing operation in the apparatus may make simpler, whereby reduction in a cleaning solution cost and simplification of the constitution of the apparatus can be achieved.

In the blood analyzer 100, although a hemolytic agent containing a quaternary ammonium salt as a cationic surfactant is used as a material having an action for hemolyzing red blood cells, the applicable hemolytic agent is not limited thereto. In this respect, a material contained in the hemolytic agent as that having the action for hemolyzing red blood cells may be selected for the application from various types of surfactants such as the cationic surfactants other than the quaternary ammonium salts used in the above-described examples, nonionic surfactants, and anionic surfactants. These materials may be the materials which can hemolyze sufficiently the red blood cells in a blood specimen at a concentration in case of hemolysis treatment, and the malarial parasite liberated can maintain the nature thereof at a certain degree. In the above-described respective examples of a blood analyzer, a hemolytic agent and a staining solution are prepared as the reagents for blood analysis in the form of separate solutions from one another; and they are mixed with each other in a step for preparing a measurement sample. The reagents for blood analysis may prepare in the form of a reagent kit composed of a plurality of solutions as described above. However, the constitution of the reagents used in the apparatus and the method of the present invention is not necessarily limited thereto, but a hemolytic agent may have been previously admixed with a staining solution to prepare a one-component reagent for blood analysis.

In the blood analyzer 100, although a semiconductor laser light source is applied as the light source for irradiating a measurement sample, the present invention is not limited thereto, but it is also possible to use a gas laser light source as represented by an argon ion laser light source.

In the blood analyzer 100, a scattered light scattered substantially in the extension direction of the optical axis of the laser beam inputting to the flow cell 301 from the laser light source 306 is detected as the forward scattered light. However, the forward scattered light is not necessarily limited to the scattered light scattered substantially in the extension direction of the optical axis of the laser beam inputting to the flow cell 301, but a scattered light scattered to the other direction at another angle may also be applied as long as the scattered light in question is the one reflecting the dimension of a particle. Otherwise, in order to obtain optical information reflecting the dimension of a particle, it may be arranged in such that a degree of light absorption or light loss produced by the particle is detected. Moreover, a scattered light scattered in the direction intersecting substantially at right angles with the optical axis of the laser beam inputting to the flow cell 301 from the laser light source 306 is detected as the side scattered light in the blood analyzer 100. However, the side scattered light is not necessarily limited to the scattered light scattered in the direction intersecting substantially at right angles with the optical axis of the laser beam inputting to the flow cell 301, but the other scattered light scattered at another angle may be applied as long as the scattered light in question is the one reflecting internal information or a surface condition of a particle. For example, the scattered light scattered in the direction not only that intersecting substantially at right angles with the optical axis of the laser beam, but also that scattered at a larger angle than that of the forward scattered light may be applied.

In the blood analyzer 100, the light detection sensitivity in the detection section 300 is set in a range where the count of white blood cells is clinically possible. Accordingly, not only small-sized white blood cells, but also large-sized white blood cells, in other words, the whole white blood cells can be detected. Therefore, the count of white blood cells may be made as a process for a clinical detection while detecting malarial parasites.

As shown in the above examples, according to the present invention, it may be determined as to the presence of malarial parasites in a specimen by detecting directly the malarial parasites; and further, the white blood cell count can be counted in high precision, even if malarial parasites exist in the specimen. As a result, information suggesting the presence of malarial parasites can be obtained in addition to results of the white blood cell count, whereby the determination whether or not malarial infection should be taken into consideration as the cause, and therefore becomes easy in the case where the white blood cell count of a patient exhibits an abnormal value.

## Claims

1. A blood analyzing method comprising steps of:
preparing a measurement sample by hemolyzing red blood cells in a blood specimen, the measurement sample containing particles;
irradiating a light on the measurement sample to detect two or more types of optical information reflecting characters of the particles in the measurement sample, thereby acquiring data indicating light intensities of the respective optical information as a particle data associated with each of the particles;
counting white blood cells based on the particle data;
outputting the result of counting white blood cells;
determining whether malarial parasites are present or not based on the particle data; and
outputting the result of determining.

2. The method of claim 1, wherein the optical information comprises a first scattered light scattered from the particles in a direction of a predetermined range, and a second scattered light scattered from the particles in a direction of another range different from that of the first scattered light.

3. The method of claim 1, wherein
the step of the sample preparing comprises a step of fluorescence-staining the white blood cells and the malarial parasites liberated from the hemolyzed red blood cells, and
the optical information is a scattered light scattered from the particles in a direction of a predetermined range, and a fluorescence emitted from the particles.

4. The method of claim 3, wherein the scattered light comprises a first scattered light scattered from the particles in a direction of a predetermined range, and a second scattered light scattered from the particles in a direction of the other range different from that of the first scattered light.

5. The method of claim 4, further comprising steps of:
obtaining a differentiation information of the white blood cells which reflects number or ratio of each subsets of white blood cells by differentiating and specifying the particle data corresponding to each types of white blood cells; and
outputting the differentiation information of the white blood cells obtained.

6. The method of claim 5, the step of obtaining a differentiation information of the white blood cells comprising:
subtracting particle data wherein the intensity of the first scattered light, the intensity of the second scattered light, and the intensity of the fluorescence are within a predetermined range from the acquired particle data; and
analyzing the remaining particle data based on the intensity of the first scattered light and the intensity of the fluorescence.

7. The method of claim 1, wherein the result of counting white blood cells output and the determining result output are displayed on a screen.

8. The method of claim 5, wherein the differentiation information of the white blood cells and the determining result are displayed on a screen.

9. A blood analyzer comprising:
a sample preparation section comprising a dispenser which provides a predetermined amount of blood specimen, a reagent chamber containing a hemolytic agent, and mixing mechanism which mixes the hemolytic agent with the blood specimen to hemolyze red blood cells in the blood, whereby a measurement sample containing particles is prepared;
a particle data acquirement section comprising a flow cell through which the measurement sample is to be flowed, a light source which irradiates a light to the measurement sample flowing through the flow cell, a first photodetector which detects a first optical information reflecting a particle character from the particles in the measurement sample to output a light intensity of the first optical information, and a second photodetector which detects a second optical information reflecting a particle character from the particles in the measurement sample to output a light intensity of the second optical information, wherein the particle data acquirement section acquires a particle data comprising data of the first and second light intensity associated with each particle;
a data analysis section which counts white blood cells and determines whether malarial parasites are present or not based on the particle data acquired by the particle data acquirement section; and
an output section which outputs the result of counting white blood cells and the determining result.

10. The blood analyzer of claim 9, wherein the first optical information is a first scattered light scattered from the particles in the measurement sample in the direction of a predetermined range, and the second optical information is a second scattered light scattered from the particles in the measurement sample in a direction of another range different from that of the first scattered light.

11. The blood analyzer of claim 9, wherein the sample preparation section comprises a second reagent chamber containing a fluorescent dye reagent for fluorescence-staining white blood cells and malarial parasites,
wherein the first optical information is a scattered light scattered from the particle in a direction of a predetermined range, and the second optical information is fluorescence emitted from the particles.

12. The blood analyzer of claim 11, wherein the particle data acquirement section further comprises a third photodetector for detecting third optical information reflecting a particle character from the particles in the measurement sample to output a light intensity of the third optical information,
wherein the particle data acquirement section acquires the particle data comprising the data of the first, second and third light intensity associated with each particle,
wherein the third optical information is a scattered light scattered from the particles in a direction of another range different from that of the scattered light of the first optical information.

13. The blood analyzer of claim 9, wherein the data analysis section differentiates the particle data corresponding to types of white blood cells to obtain a differentiation information of the white blood cells which reflects number or ratio of each subsets of white blood cells, and the output section outputs the differentiation information.

14. The blood analyzer of claim 13, wherein the data analysis section obtains the differentiation information of the white blood cells by subtracting particle data
wherein the intensity of the first scattered light, the intensity of the second scattered light, and the intensity of the fluorescence are within a predetermined range from the acquired particle data, and analyzes the remaining particle data based on the intensity of the first scattered light and the intensity of the fluorescence.

15. The blood analyzer of claim 9, wherein the output section displays the result of counting white blood cells and the determining result on a screen.

16. The blood analyzer of claim 13, wherein the output section displays the differentiation information of the white blood cells and the determining result on a screen.

17. A blood analyzing method comprising steps of:
preparing a measurement sample by hemolyzing red blood cells in a blood specimen which is expected to contain malarial parasites;
irradiating a light to the measurement sample and detecting two or more types of optical information reflecting a character of particles in the measurement sample by two or more photodetectors, wherein detection sensitivity of each photodetector is set in a range where clinical white blood cell counting is possible; and
discriminating white blood cells from malarial parasites based on the two or more types of optical information detected, and counting the number of the white blood cells discriminated.

18. The method of claim 17, wherein whether malarial parasites are present or not is further determined.

19. A blood analyzer comprising:
a sample preparation section comprising a hemolytic agent addition mechanism for adding the hemolytic agent to a blood specimen which is expected to contain malarial parasites to hemolyze red blood cells in the blood specimen thereby a measurement specimen is prepared;
a detection section comprising a light source for irradiating a light to the measurement sample, and a photodetector for detecting optical information reflecting a particle character from respective particles in the measurement sample, wherein detection sensitivity of the photodetector is set in a range where clinical white blood cell counting is possible; and
a controller for discriminating white blood cells from malarial parasites based on the optical information detected by the detection section to count the white blood cells discriminated.

20. The blood analyzer of claim 19, wherein the controller determines whether malarial parasites are present or not.
